Europäisches Patentamt

European Patent Office

Office européen des brevets

(11) Veröffentlichungsnummer: **0 449 090 A1**

# (12) EUROPÄISCHE PATENTANMELDUNG

(21) Anmeldenummer: 91104294.3

(22) Anmeldetag: 20.03.91

(51) Int. Cl.5: **C10B 53/00**

(30) Priorität: 27.03.90 DE 4009798

(43) Veröffentlichungstag der Anmeldung:
02.10.91 Patentblatt 91/40

(84) Benannte Vertragsstaaten:
AT BE CH ES FR GB GR IT LI NL SE

(71) Anmelder: RUHRKOHLE AKTIENGESELLSCHAFT
Rellinghauser Strasse 1 Postfach 10 32 62
W-4300 Essen 1(DE)

(72) Erfinder: Dürrfeld, R., Dr.
Auf der Bucht 31
W-4300 Essen 15(DE)
Erfinder: Langhoff, J., Dr.
Kleinberger Hof 7
W-4220 Dinslaken(DE)

(54) Verfahren zur Verwertung des beim Shreddern von Kraftfahrzeugen anfallenden Leichtgutes.

(57) Bei einem Verfahren zur Verwertung des beim Shreddern von Kraftfahrzeugen anfallenden Leichtgutes wird das Rezyklieren des Leichtgutes dadurch möglich, daß zunächst das Shredderleichtgut einer Pyrolysebehandlung unterzogen wird, in der es in gasförmige, flüssige und feste Bestandteile überführt wird. Die einzelnen Fraktionen werden getrennt weiterbehandelt und verwertet. Dies geschieht dadurch, daß diese Fraktionen jeweils einem gasförmigen, flüssigen bzw. festen Stoff bzw. Stoffgemisch, welcher/welches als Vor- oder Zwischenprodukt eines bekannten chemischen Prozesses geläufig ist, beigemischt und gemeinsam mit diesem entsprechend dem bekannten chemischen Prozeß weiterverarbeitet und schließlich verwertet werden. Auf diese Weise erfolgt eine quantitative Verwertung des Shredderleichtgutes von Kraftfahrzeugen in besonders umweltschonender Weise.

EP 0 449 090 A1

Die Erfindung betrifft ein Verfahren zur Verwertung des beim Shreddern von Kraftfahrzeugen anfallenden Leichtgutes. Unter Leichtgut wird die bei der Abtrennung von Metallschrott aus den Kraftfahrzeugen verbleibende Restfraktion verstanden. Das Shredderleichtgut macht etwa 25 bis 30 % des Gewichtes von Kraftfahrzeugen aus. Es enthält neben Glas, Schmutz und Rost verschiedenste Kunststoffe, Holz, Naturfasern, Gummi u. dgl.. Das Shredderleichtgut wird derzeit noch ausnahmslos deponiert. Eine Gesetzesänderung wird dies jedoch zukünftig verbieten.

Der Erfindung liegt die Aufgabe zugrunde, ein Verfahren zum Rezyklieren des beim Shreddern von Kraftfahrzeugen anfallenden Leichtgutes zu schaffen. Diese Aufgabe wird durch das Verfahren mit den Merkmalen des Patentanspruchs 1 gelöst. Die Erfindung basiert demnach auf dem Grundgedanken, das Shredderleichtgut mittels einer Pyrolysebehandlung, vorzugsweise einer Erwärmung auf ca. 450 bis 650, vorzugsweise auf etwa 550 °C vorzugsweise, unter weitgehendem Ausschluß von Sauerstoff in eine gasförmige, eine flüssige und eine feste Fraktion zu überführen und jede der drei Fraktionen einem gasförmigen, flüssigen bzw. festen Stoff bzw. Stoffgemisch, welcher/welches als Vor- oder Zwischenprodukt eines bekannten chemischen Prozesses geläufig ist, beizumischen und gemeinsam mit diesem entsprechend dem bekannten chemischen Prozeß weiter zu verarbeiten und schließlich zu verwerten.

Es hat sich gezeigt, daß durch die Pyrolyse und das Trennen der Pyrolyseprodukte des Shredderleichtgutes von Kraftfahrzeugen in eine gasförmige, eine flüssige und eine feste Fraktion die einzelnen Fraktionen in ihrer Art, in ihren Eigenschaften und in ihren chemischen Zusammensetzungen bestimmten Stoffen bzw. Stoffgemischen ähneln, die als Vor- oder Zwischenprodukt aus bestimmten chemischen Prozessen bekannt sind. Dies trifft insbesondere auf Vor- bzw. Zwischenprodukte des Kokereiprozesses bzw. des Erdöl-Raffinationsprozesses zu. Natürlich sind die durch die erfindungsgemäße Pyrolyse des Shredderleichtgutes von Kraftfahrzeugen und die anschließende Zerlegung in die drei Fraktionen hervorgebrachten Stoffe bzw. Stoffgemische niemals identisch mit den Vor- oder Zwischenprodukten aus den erwähnten chemischen Prozessen, doch beinhalten die drei Fraktionen des erfindungsgemäßen Pyrolyseprozesses eine Reihe von weiterverwertbaren Bestandteilen, die den Wertstoffen der Vor- oder Zwischenprodukte aus den erwähnten chemischen Prozessen ähnlich sind. Andere Bestandteile der drei Fraktionen des erfindungsgemäßen Pyrolyseprozesses sind zwar als Ballastanteile bzw. Verunreinigungen als solche nicht oder nur schlecht verwertbar oder sogar störend, doch trifft dies auch auf die Vor- oder Zwischenprodukte aus den erwähnten chemischen Prozessen zu, denen diese Fraktionen erfindungsgemäß beigemischt werden.

Durch die Erfindung wird es also möglich, das Shredderleichtgut von Kraftfahrzeugen in verschiedenste Bestandteile aufzuschließen und diese in mehr oder weniger standardisierten Prozessen gemeinsam mit anderen Wertstoffen aufzubereiten und in derselben Weise wie jene zu verwerten.

Ein besonderer Vorteil liegt darin, daß die Verarbeitungs- und Verwertungsschritte von Vor- oder Zwischenprodukten aus anderen chemischen Prozessen, denen die erfindungsgemäß entstehenden Fraktionen aus der Pyrolyse des Shredderleichtgutes von Kraftfahrzeugen beigemischt werden, allgemein beherrscht werden und lange erprobt sind. Von besonderem Vorteil ist es, daß bei den bekannten chemischen Prozessen außerordentlich große Mengen an Vor- oder Zwischenprodukten bearbeitet werden, so daß die erfindungsgemäße Beimischung der Fraktionen aus der Pyrolyse des Shredderleichtgutes von Kraftfahrzeugen nicht allzu sehr ins Gewicht fällt. Es können daher in bereits vorhandenen chemischen Anlagen Primärrohstoffe durch Reststoffe anderer Prozesse verdrängt werden. Die Veränderungen der Vor- oder Zwischenprodukte der chemischen Prozesse hinsichtlich ihrer Zusammensetzung aufgrund der erfindungsgemäßen Beimischung der Fraktionen aus dem Pyrolyseprozeß werden im allgemeinen so gering sein, daß die Weiterverarbeitungsprozesse ohne Änderungen gegenüber der Verarbeitung des reinen Vor- bzw. Zwischenproduktes durchgeführt werden können. Entsprechend wird es auch bei den letztendlich entstehenden Wertstoffen praktisch zu keinen spürbaren Veränderungen durch die erfindungsgemäße Vorgehensweise kommen.

Erfindungsgemäß werden also Bestandteile des Shredderleichtgutes von Kraftfahrzeugen in "geschlossenen Systemen" weiterverarbeitet. Dies geschieht quantitativ und erfolgt im Rahmen erprobter und konzessionierter Verfahren. Insbesondere ist eine Restentsorgung nach der Verarbeitung und Verwertung des Shredderleichtgutes nicht erforderlich, denn etwa anfallende Restbestandteile fallen gemeinsam mit den Restbestandteilen aus der Verarbeitung und Verwertung der Vor- bzw. Zwischenprodukte, denen die erfindungsgemäßen Fraktionen des Pyrolyseschrittes beigemischt werden, an und werden daher auch gemeinsam mit diesen entsorgt. Auch für diese Entsorgungsschritte gibt es erprobte Wege. Z. B. fällt der Ballastanteil von Kokskohle, der nach dem Verkokungsprozeß in dem Koks noch vorhanden ist, bei einer Verwendung dieses Kokses im Hochofenprozeß als Schlacke an, die wiederum als Baustoff verwertet wird. Durch die Beimischung der festen Fraktion des erfindungsgemäßen Pyrolyseschrittes zu einer Kokskohle werden also die verkokbaren Bestandteile der festen Fraktion des erfindungsgemäßen Pyrolyseschrittes genauso wie der verkokbare Anteil der Kokskohle behandelt, während die übrigen Bestandteile der festen Fraktion des erfindungsgemäßen Pyrolyseschrittes in gleicher Weise wie die Ballastanteile der Kokskohle letztendlich als Schlakke bzw. als Baustoff anfallen und verwertet werden.

Als besonders vorteilhaft hat es sich erwiesen, daß bei dem erfindungsgemäßen Pyrolyseschritt evtl. vorhandene chlororganische Produkte des Shredderleichtgutes von Kraftfahrzeugen, welche im wesentlichen aus PCBs bestehen, weitgehend gecrackt werden. Hierbei entstehen Aromaten und Chlor, das unter hydrierenden Bedingungen zu HCl umgewandelt und z. B. ausgewaschen werden kann. Damit verbleiben in den erfindungsgemäßen Fraktionen des Pyrolyseschrittes nicht nachweisbare Mengen der möglicherweise ursprünglich vorhandenen, chlororganischen Bestandteile des Shredderleichtgutes von Kraftfahrzeugen.

Nach einer alternativen Ausführungsform der Erfindung (Patentanspruch 5) ist es auch möglich, das bei dem erfindungsgemäßen Pyrolyseschritt anfallende Produktgemisch in einer Müllverbrennungsanlage gemeinsam mit den dort zu verbrennenden Ausgangsstoffen zu verbrennen. Auch in diesem Fall kommen die Vorteile des erfindungsgemäßen Pyrolyseschrittes voll zum Tragen. Dis Auftrennung in die drei Fraktionen und anschließende Beimischung zu Vor- bzw. Zwischenprodukten und die gemeinsame Weiterverarbeitung und Verwertung mit diesen Produkten hat gegenüber der Beimischung zu den in einer Müllverbrennungsanlage zu verbrennenden Ausgangsstoffen allerdings den Vorteil, daß dadurch weniger $CO_2$ und weniger Rauchgasschadstoffe aufgrund der Verarbeitung und Verwertung des Shredderleichtgutes von Kraftfahrzeugen entstehen.

Ferner hat sich gezeigt, daß neben dem Shredderleichtgut von Kraftfahrzeugen auch sogenannte Altlasten in Böden, insbesondere in Deponien, nach dem erfindungsgemäßen Verfahren verarbeitet werden können, d. h., daß die Dekontaminierung dieser Altlasten einerseits zu einer Wieder- bzw. Weiterverwertung verwertbarer Bestandteile der Altlasten führt, andererseits die Dekontaminierung in einer Weise geschieht, die die Umwelt besonders wenig belastet und die das Neuerrichten besonderer Dekontaminierungsanlagen vermeidet.

Schließlich ist es auch ein Vorteil der Erfindung, daß chemische Anlagen, wie Kokereien oder Raffinerien an verschiedenen Plätzen eines Landes verteilt existieren, so daß die Verarbeitung und Verwertung des Shredderleichtgutes von Kraftfahrzeugen oder von "Altlasten" in gewissem Umfang dezentral erfolgen kann.

Ein weiterer Vorteil des erfindungsgemäßen Pyrolyseschrittes liegt darin, daß durch ihn das zu entsorgende Ausgangsstoffgemisch in einer Weise aufbereitet wird, die das Ausgangsstoffgemisch für den nachfolgenden Verarbeitungs- und Verwertungsschritt besonders gut "verdaulich" macht.

Die erfindungsgemäße flüssige Fraktion aus dem Pyrolyseprodukt enthält maximal 300 - 400 ppm des ursprünglich im Shredderleichtgut vorhandenen Chlors. Zur Dechlorierung bei der gemeinsamen Weiterverarbeitung mit den Vor- oder Zwischenprodukten, denen diese flüssige Fraktion zunächst beigemischt wird, können reduzierende bzw. hydrierende Bedingungen gewählt werden. Es kann aber auch eine Dechlorierung mit Na vorgenommen werden, die als "Degussa-Verfahren" bekannt ist und bei der NaCl entsteht. Es kommt aber auch eine Vergasung nach bekannten Methoden in Betracht.

Das erfindungsgemäße Verfahren wird nachfolgend am Beispiel der Kombination der Entsorgung von Shredderleichtgut von Kraftfahrzeugen mit dem Kokereiprozeß näher erläutert:

Ca. 40.000 Jahrestonnen (jato) Shredderrückstände oder andere pyrolysierbare Einsatzstoffe werden bei ca. 550 °C in einer außen beheizten Drehtrommel pyrolysiert. Abhängig vom Gehalt an Inertstoffen im Einsatzgut werden 18.000 - 23.000 jato feste Reststoffe (Pyrolysekoks), 8 - 12.000 jato ölige und 9 - 10.000 jato gasförmige Pyrolyseprodukte erzeugt.

Im Verbund mit einer Kokerei wird der Pyrolysekoks durch Zumischung zur Kokskohle in den Hochofenkoks eingebunden. Das Zumischungsverhältnis wird so gewählt, daß die Anforderungen an den Hochofenkoks nicht eingeschränkt werden. Eine Zumischmenge von 1 - 5 % ist unbedenklich.

Das Pyrolysegas wird gemeinsam mit dem Koksofengas in den gleichen Aufbereitungsanlagen gereinigt. Da die Produktströme einer Kokerei sich im gleichen Verhältnis wie in einer Pyrolyseanlage aufteilen, liegt die Zumischrate von Pyrolysegas zum Koksofengas wie beim Pyrolysekoks im Bereich von 1 - 5 %.

Die Pyrolyseöle werden in einer Hydrieranlage oder in einer Vergasungsanlage zu Produkten einer höheren Veredlungsstufe aufbereitet. Es handelt sich dabei um Anlagen, die entweder am Standort der Pyrolyse bestehen oder durch Straßen- und Schienentransport leicht erreichbar sind. Die Produkte werden in der Regel von Raffinerien oder Synthesegasherstellern aufgenommen.

## Patentansprüche

1. Verfahren zur Verwertung des beim Shreddern von Kraftfahrzeugen anfallenden Leichtgutes nach der Maßgabe, das Shredderleichtgut mittels einer Pyrolysebehandlung in eine gasförmige, eine flüssige und eine feste Fraktion zu überführen und jede der drei Fraktionen einem gasförmigen, flüssigen bzw. festen Stoff bzw. Stoffgemisch, welcher/welches als Vor- oder Zwischenprodukt eines bekannten chemischen Prozesses anfällt, beizumischen und gemeinsam mit diesem entsprechend dem bekannten chemischen Prozeß weiter zu verarbeiten und schließlich zu verwerten.

2. Verfahren nach Patentanspruch 1, dadurch gekennzeichnet, daß die gasförmige Fraktion noch unbehandelten Koksofen- oder energiereichen Hydrierabgasen beigemischt und gemeinsam mit diesen verarbeitet und verwertet wird.

3. Verfahren nach Patentanspruch 1 oder 2, dadurch gekennzeichnet, daß die flüssige Fraktion noch unbehandelten Altölen oder einer Ölfraktion aus einem Erdölraffinationsprozeß oder einer Ölfraktion aus einem Kohleveredlungsprozeß beigemischt und gemeinsam mit diesen dechloriert, raffiniert oder vergast und weiterverwertet wird.

4. Verfahren nach einem der Pantentansprüche 1 bis 3, dadurch gekennzeichnet, daß die feste Fraktion einer Kokskohle oder einer festen Fraktion aus einem Erdölraffinationsprozeß beigemischt und gemeinsam mit dieser zu Koks bzw. Petrolkoks verkokt und weiterverwertet wird.

5. Verfahren zur Verwertung des beim Shreddern von Kraftfahrzeugen anfallenden Leichtgutes nach der Maßgabe, daß das Shredderleichtgut mittels einer Pyrolysebehandlung in gasförmige, flüssige und feste Zwischenprodukte überführt wird und die so anfallenden Zwischenprodukte in einer Müllverbrennungsanlage gemeinsam mit den dort zu verbrennenden Ausgangsstoffen verbrannt werden.

6. Verfahren nach einem der Patentansprüche 1 bis 5, dadurch gekennzeichnet, daß die Pyrolysebehandlung durch Erwärmung des Shredderleichtgutes auf etwa 450° C bis 650° C, vorzugsweise auf etwa 550° C erfolgt.

7. Verfahren nach einem der Patentansprüche 1 bis 6, dadurch gekennzeichnet, daß die Pyrolysebehandlung durch Erwärmung des Shredderleichtgutes unter weitgehendem Ausschluß von Sauerstoff erfolgt.

8. Verfahren nach einem der Patentansprüche 1 bis 7, dadurch gekennzeichnet, daß in dem Pyrolyseschritt etwa in dem Shredderleichtgut vorhandene chlororganische Produkte gecrackt werden.

**Europäisches Patentamt**

# EUROPÄISCHER RECHERCHENBERICHT

Nummer der Anmeldung

**EP 91 10 4294**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | TECHNISCHE RUNDSCHAU, Band 80, Nr. 23, 3. Juni 1988, Seiten 78-81, Bern, CH; "Kunststoffpyrolyse: Rohstoffquelle für die Chemie" * Seiten 78-81 * | 1,3,6-8 | C 10 B 53/00 |
| X | US-A-3 736 111 (GARDNER) * Patentanspruch 3; Spalte 4, Zeilen 69-76 * | 1,3 | |
| X | DE-A-3 247 388 (WSW PLANUNGSGESELLSCHAFT) * Patentanspruch 1 * | 1-4 | |
| X | DE-A-3 400 976 (SAARBERG-HÖLTER-UMWELTTECHNIK) * Patentanspruch * | 5 | |
| | | | **RECHERCHIERTE SACHGEBIETE (Int. Cl.5)** |
| | | | C 10 B |

Der vorliegende Recherchenbericht wurde für alle Patentansprüche erstellt

| Recherchenort | Abschlußdatum der Recherche | Prüfer |
|---|---|---|
| Den Haag | 16 Juni 91 | MEERTENS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
&: Mitglied der gleichen Patentfamilie, übereinstimmendes Dokument